# EUROPÄISCHE PATENTSCHRIFT

(11) **EP 1 565 334 B1**
(45) Veröffentlichungstag und Bekanntmachung des Hinweises auf die Patenterteilung: **29.03.2006**
(21) Anmeldenummer: 03779703.2
(22) Anmeldetag: 18.11.2003
(51) Int. Cl.: B60J 7/14

(54) **CABRIOLET-FAHRZEUG**
CONVERTIBLE VEHICLE
VEHICULE CABRIOLET

(30) Priorität: 21.11.2002 DE 10254370
(43) Veröffentlichungstag der Anmeldung: 24.08.2005
(73) Patentinhaber: Wilhelm Karmann GmbH, 49084 Osnabrück (DE)
(72) Erfinder: BAUMEIER, Andreas, 49143 Bissendorf (DE); JÜRGENS, Eduard, 49186 Bad Iburg (DE)
(74) Vertreter: Ouzman, Beverley Nicola Claire
(86) Internationale Anmeldenummer: PCT/DE2003/003814
(87) Internationale Veröffentlichungsnummer: WO 2004/045879

(56) Entgegenhaltungen:
- FR-A- 2 805 218
- US-A- 6 131 988

## Beschreibung

Die Erfindung betrifft ein Cabriolet-Fahrzeug mit einem Dach nach dem Oberbegriff des Anspruchs 1 sowie nach dem Oberbegriff des Anspruchs 11. Ein Farhzeug dieser Art ist in US 6131988 A offenbart.

Es ist bekannt, Cabriolet-Dächer aus beispielsweise metallischen starren Teilen in Wagenfarbe, also in der Farbe, in der die Karosserie lakkiert ist, einzufärben. Da eine Montage der Dächer erst nach der Lackierung möglich ist, werden die Rohkarossen und die Dachteile einzeln und hintereinander durch die Lackierstraße gefahren. Dieses bedingt pro Fahrzeug einen gegenüber einem geschlossenen Fahrzeug vergrößerten Zeitaufwand, der Durchlauftakt durch die Lakkierstraße ist somit verringert. Die Lackierzeit des Daches ist aufgrund der Form des Daches häufig in der Größenordnung der Lackierzeit der Rohkarosse.

Der Erfindung liegt das Problem zugrunde, hier eine Verbesserung zu schaffen.

Die Erfindung löst dieses Problem durch ein Cabriolet-Fahrzeug mit den Merkmalen des Anspruchs 1 und durch ein Dach mit den Merkmalen des Anspruchs 12 sowie durch ein Cabriolet-Fahrzeug mit den Merkmalen des Anspruchs 11. Hinsichtlich vorteilhafter Ausgestaltungen der Erfindung wird auf die weiteren Ansprüche 2 bis 10 verwiesen.

Das erfindungsgemäße Cabriolet-Fahrzeug nach Anspruch 1 ermöglicht eine Effektivitätssteigerung in der Lackierstraße, da nicht mehr vollständige Dächer lackiert werden müssen. Die einzufärbenden Außenteile haben im Vergleich zu vollständigen Dächern eine erheblich kleinere einzufärbende Fläche, so daß deren Lackierung schneller geht. Zudem sind die Außenteile in ihrer Struktur sehr einfach, was die Lackierung weiter begünstigt.

In der Ausbildung nach Anspruch 11 können auch gänzlich unlackierte Außenteile zur Abdeckung seitlicher Dachbereiche verwendet werden, etwa sogar aus Recycling-Granulat hergestellte Kunststoffteile oder transparente Glas- oder Kunststoffteile.

Eine Reduzierung der Masse des Daches kann durch die Verwendung von Leichtbaumaterialien, insbesondere Kunststoffen, für die Außenteile erreicht werden.

Wenn die Außenteile lösbar mit der Dachstruktur verbindbar sind, ist auch nach einiger Gebrauchszeit ein einfacher Austausch von Außenteilen möglich, etwa auch, um solche mit anderer Farbe zu montieren.

Die Montage der Außenteile kann vorteilhaft an ein ansonsten bereits fertig montiertes Dach erfolgen. Die Montage kann durch eine lösbare mechanische Verbindung, beispielsweise eine Klipsverbindung, die zumindest als Positionierungshilfe dient, eventuell unterstützt durch ein zusätzliches Verkleben, besonders einfach sein.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:

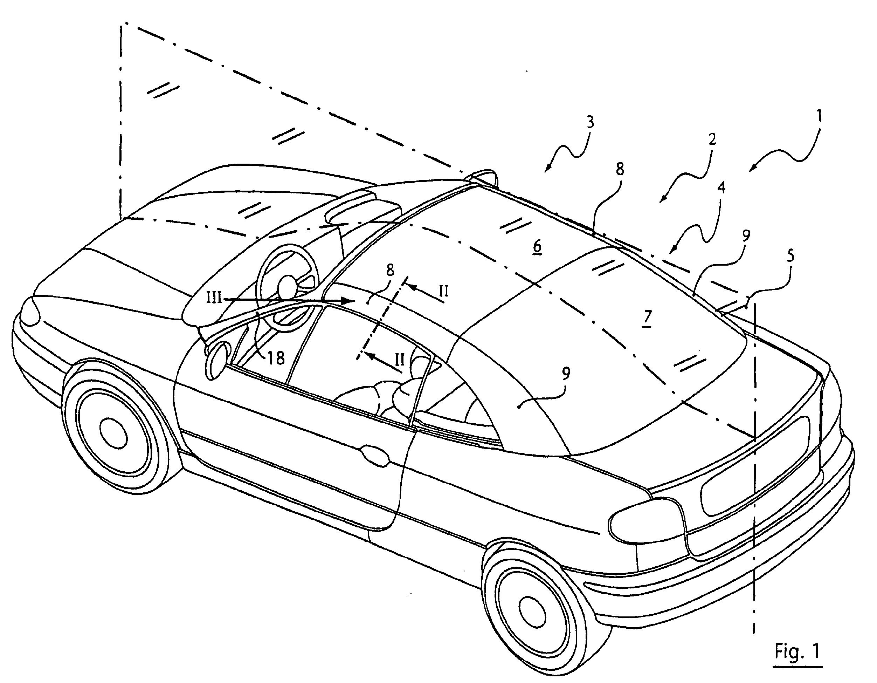

- Fig. 1: eine schematische Gesamtansicht eines erfindungsgemäßen Cabriolet-Fahrzeugs mit im Dach zwischen den eingefärbten Außenteilen liegenden Glasbereichen bei geschlossenem Dach,
- Fig. 2: einen Schnitt entlang der Linie II-II in Fig. 1,

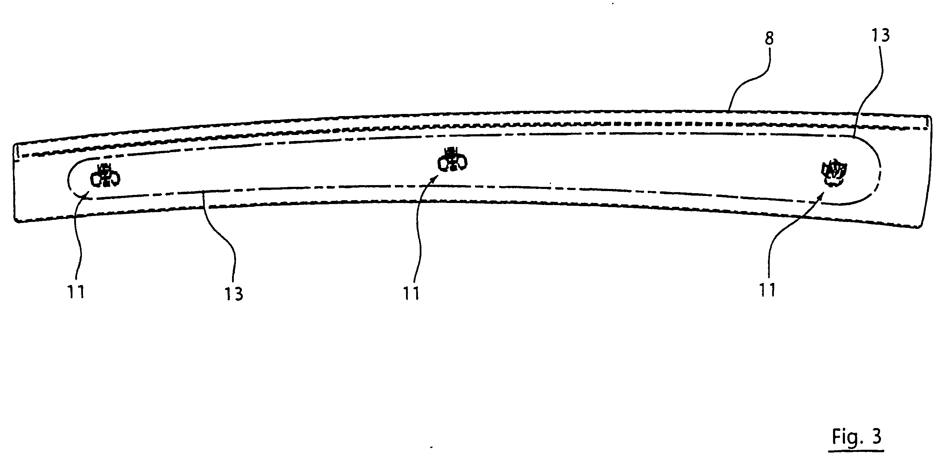

- Fig. 3: eine Ansicht in Richtung der Fahrzeuglängsmittelebene auf ein hier zur besseren Veranschaulichung transparent angenommenes Außenteil und seine Befestigung, etwa entsprechend einer Ansicht aus Richtung des Pfeils III in Fig. 1.

Das dargestellte Cabriolet-Fahrzeug 1 weist ein faltbares Dach 2 auf, das im Ausführungsbeispiel einen vorderen Dachteil 3 und einen hinteren Dachteil 4 umfaßt. Auch eine Unterteilung in mehr als zwei Dachteile ist möglich.

Die Dachteile 3, 4 sind symmetrisch bezüglich einer vertikalen Längsmittelebene 5 ausgebildet und weisen in ihren diesbezüglich mittleren Bereichen 6 beim vorderen Dachteil 3 bzw. 7 beim hinteren Dachteil 4 jeweils Glasflächen auf. Auch eine andere Gestaltung ist möglich, beispielsweise derart, daß auch die mittleren Bereiche ähnlich wie die seitlichen ausgebildet und aufsetzbare lackierte Teile aufweisen. Auch eine textile Bespannung der mittleren Bereiche ist denkbar.

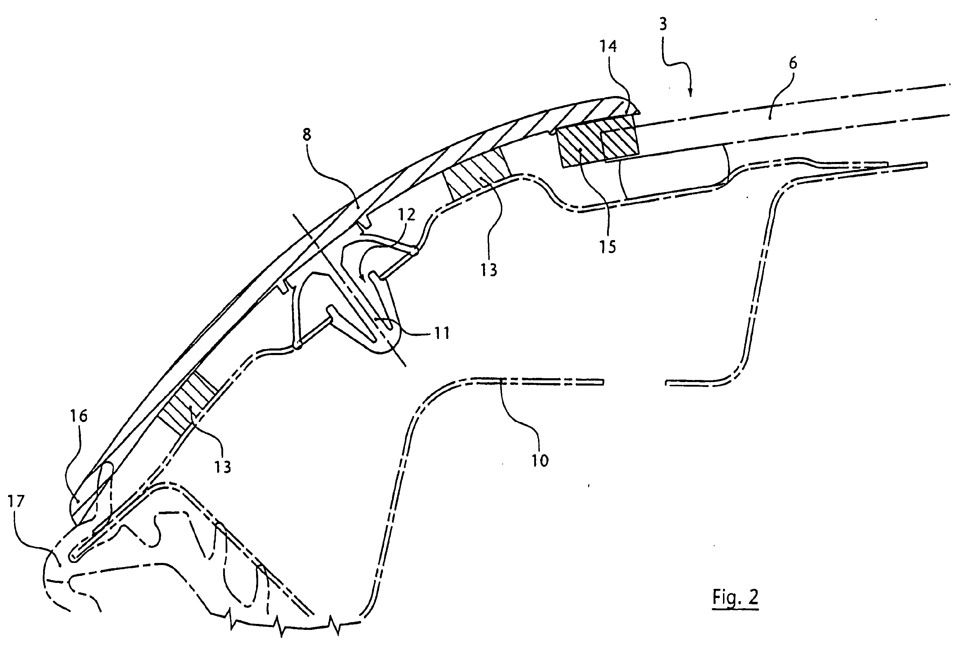

Den Fahrzeuglängsseiten sind hier an jedem Dachteil 3, 4 einzeln anmontierbare Außenteile 8, 9 zugeordnet. Diese sind als Längsplanken auf seitliche, das Dach 2 unterstützende Rahmen 10, etwa Hohlprofile, aufgesetzt und mit diesen mittelbar oder unmittelbar verbunden (Figur 2). Die Außenteile 8, 9 haben selbst keine tragende Funktion und können vorteilhaft zur Gewichtsreduzierung aus einem Leichtbauwerkstoff, etwa Kunststoff, Leichtmetall oder einem metallischen Schaumwerkstoff, gebildet sein.

Im Ausführungsbeispiel bestehen die Außenteile aus Kunststoff und sind beispielsweise einstückig oder - wie hier - mehrteilig mit Klipsansätzen 11 im Spritzgußverfahren hergestellt, über die sie in Ausnehmungen 12 der Dachrahmen 10 eingedrückt und rastend verhakt werden können (Fig. 2). Es ist sowohl eine unlösbare als auch eine lösbare Verbindung zwischen den Außenteilen 8, 9 und den Dachrahmen 10 möglich. Im Ausführungsbeispiel sind pro Außenteil 8, 9 mehrere Klipsansätze 11 in einer Längsreihe vorgesehen.

Zusätzlich zu der Klipsverbindung 11, 12 ist im Ausführungsbeispiel eine Kleberaupe 13 vorgesehen, die auf den Dachrahmen 10 von einem Roboter aufgebracht werden kann und die Ausnehmungen 12, in die die Klipsansätze 11 eingreifen, umläuft. Durch Eindrücken der Klipse 11 wird eine zuverlässige Positionierung der Außenteile 8, 9 auf den seitlichen Rahmen 10 erreicht. Gleichzeitig wird dabei ein Aufdrücken der Außenteile 8, 9 auf die Kleberaupe 13 bewirkt, die die Kräfteübertragung sicherstellt. An den der Längsmittelebene 5 zugewandten Rändern 14 sind die Außenteile 8, 9 über eine abstandhaltende Dichtung 15 auf den mittleren Bereich 6 bzw. 7 aufgedrückt, wobei der Druck ohne weitere Verbindungsmittel durch die Spannung im Material der Außenteile 8, 9 bewirkt sein kann. Durch Hochbiegen des Randes 14 wird dann auch die Klebung 13 zugänglich und kann gegebenenfalls später entfernt werden. Ähnlich sind die Verhältnisse am Fahrzeugaußenrand 16 der Außenteile 8, 9: Auch hier liegt der Rand 16 unter Federspannung auf einer Dichtung 17, die am Rahmenteil 10 gehalten ist, auf. Entsprechend kann durch Aufbiegen des Randes 16 auch hier eingegriffen werden, wenn ein Austausch der Außenteile 8, 9 vorgenommen werden soll.

Dabei ist beispielsweise ein Tausch von Außenteilen 8, 9 in Wagenfarbe gegen solche in Kontrastfarbe möglich. Neben einem Sortiment von Außenteilen 8, 9 mit verschiedenen Farben ist auch die Ausbildung leicht variierender Formen möglich, etwa durch glattflächige, eher elegante Außenteile 8, 9 einerseits und eher sportliche, mit Windleitfunktionen andeutenden Ausprägungen versehene Außenteile 8, 9 andererseits. Ebenso sind für ein preiswertes Grundmodell unlackierte Außenteile 8, 9, etwa auch aus Recycling-Werkstoffen, denkbar. Auch transparente Außenteile 8, 9 können verwendet werden. Insgesamt ist die Gestaltungsfreiheit für die Designer erheblich gesteigert.

In der Herstellung können die Außenteile 8, 9, sofern sie lackiert werden sollen, aufgrund ihrer kompakten Form einfach mit der Karosserie durch die Lackierstraße bewegt werden. Es kommt nur auf eine gleichmäßige Lakkierung der Außenseiten an, irgendwelche größeren Hinterschneidungen, Hohlräume, Kanten oder ähnliches sind nicht vorhanden. Die insgesamt am Dach 2 in Anpassung an die Karosserie zu lackierende Fläche ist damit minimiert. Bei einer Anordnung von derartigen Außenteilen 8, 9 sowohl am vorderen 3 als auch am hinteren Dachteil 4 kann zusammen mit einem lackierten Windschutzscheibenrahmen 18 ein farblich und in der Anmutung geschlossen wirkender seitlicher Dachrand erreicht werden, der dem eines insgesamt mitlackierten Daches in seiner Wertigkeit entsprechen kann.

Auch die Lackierung von nur einzelnen Außenteilen 8 oder 9 der Dachteile 3, 4 oder eine Kontrastlackierung der Außenteile 8, 9 ist je nach gestalterischen Anforderungen möglich.

## Patentansprüche

1. Cabriolet-Fahrzeug (1) mit einem Dach (2), das zumindest zwei Teile (3;4) umfaßt, die eingefärbte, insbesondere in Anpassung an die Karosseriefarbe abgestimmte, Bereiche aufweisen,
**dadurch gekennzeichnet,**
**daß** die eingefärbten Bereiche durch einzelne, mit einer tragenden Struktur (10) der Dachteile (3;4) mittelbar oder unmittelbar verbindbare separate Außenteile (8;9) gebildet sind.

2. Cabriolet-Fahrzeug nach Anspruch 1,
**dadurch gekennzeichnet,**
**daß** die Außenteile (8;9) aus Leichtbaumaterial gebildet sind.

3. Cabriolet-Fahrzeug nach einem der Ansprüche 1 oder 2,
**dadurch gekennzeichnet,**
**daß** die Außenteile (8;9) aus Kunststoff gebildet sind.

4. Cabriolet-Fahrzeug nach einem der Ansprüche 1 bis 3,
**dadurch gekennzeichnet,**
**daß** die Außenteile (8;9) lösbar mit der Dachstruktur (10) verbindbar sind.

5. Cabriolet-Fahrzeug nach einem der Ansprüche 1 bis 4,
**dadurch gekennzeichnet,**
**daß** die Außenteile (8;9) mit der Dachstruktur (10) mechanisch verbindbar sind.

6. Cabriolet-Fahrzeug nach Anspruch 5,
**dadurch gekennzeichnet,**
**daß** die Außenteile (8;9) an der Dachstruktur (10) anklipsbar sind.

7. Cabriolet-Fahrzeug nach einem der Ansprüche 1 bis 6,
**dadurch gekennzeichnet,**
**daß** die Außenteile (8;9) mit der Dachstruktur (10) verklebbar sind.

8. Cabriolet-Fahrzeug nach einem der Ansprüche 1 bis 7,
**dadurch gekennzeichnet,**
**daß** die Außenteile (8;9) sich an seitlichen Längsrändern der Dachteile (3;4) erstrecken, und daβ in einem bezüglich einer vertikalen Fahrzeuglängsmittelebene (5) mittleren Bereich (6;7) transparente Plattenkörper vorgesehen sind.

9. Cabriolet-Fahrzeug nach einem der Ansprüche 1 bis 8,
**dadurch gekennzeichnet,**
**daß** ein Sortiment von Außenteilen (8;9) vorhaltbar und an das ansonsten fertige Dach (2) anmontierbar ist.

10. Cabriolet-Fahrzeug nach Anspruch 9,
**dadurch gekennzeichnet,**
**daß** Außenteile (8;9) des Sortiments unterschiedliche Farben und/oder Formen aufweisen.

11. Cabriolet-Fahrzeug (1) mit einem Dach (2), das zumindest zwei Teile (3;4) umfaßt, die an seitlichen Außenkanten den Dachrahmen (10) überdeckende Bereiche aufweisen
**dadurch gekennzeichnet,**
**daß** die überdeckenden Bereiche durch einzelne, mit einer tragenden Struktur (10) der Dachteile (3;4) mittelbar oder unmittelbar verbindbare separate Außenteile (8;9) gebildet sind.

12. Dach (2) eines Cabriolet-Fahrzeugs (1) nach einem der Ansprüche 1 bis 10.

## Claims

1. A cabriolet vehicle (1) with a roof (2) which includes at least two parts (3; 4) which have coloured areas which are co-ordinated in particular to match the colour of the car body,
**characterised in that**
the coloured areas are formed by individual separate external parts (8; 9) which can be directly or indirectly connected to a bearing structure (10) of the roof parts (3; 4).

2. The cabriolet vehicle according to Claim 1,
**characterised in that**
the external parts (8; 9) are made of lightweight construction material.

3. The cabriolet vehicle according to one of Claims 1 or 2,
**characterised in that**
the external parts (8, 9) are made of plastic.

4. The cabriolet vehicle according to one of Claims 1 to 3,
**characterised in that**
the external parts (8; 9) can be detachably connected to the roof structure (10).

5. The cabriolet vehicle according to one of Claims 1 to 4,
**characterised in that**
the external parts (8; 9) can be mechanically connected to the roof structure (10).

6. The cabriolet vehicle according to Claim 5,
**characterised in that**
the external parts (8; 9) can be clipped onto the roof structure (10).

7. The cabriolet vehicle according to one of Claims 1 to 6,
**characterised In that**
the external parts (8; 9) can be glued to the roof structure (10).

8. The cabriolet vehicle according to one of Claims 1 to 7,
**characterised in that**
the external parts (8; 9) extend at lateral longitudinal edges of the roof parts (3; 4) and **In that** transparent plate bodies are provided in an area (6; 7) which is in the middle in relation to a vertical longitudinal midplane (5) of the vehicle.

9. The cabriolet vehicle according to one of Claims 1 to 8,
**characterised in that**
a range of external parts (8; 9) can be non-permanently provided and can be mounted onto the otherwise complete roof (2).

10. The cabriolet vehicle according to Claim 9,
**characterised in that**
external parts (8; 9) of the range are of different colours and/or shapes.

11. A cabriolet vehicle (1) with a roof (2) which includes at least two parts (3; 4) which have, at lateral external edges, areas which cover the roof frame (10),
**characterised in that**
the covering areas are formed by individual separate external parts (8, 9) which can be directly or indirectly connected to a bearing structure (10) of the roof parts (3; 4).

12. The roof (2) of a cabriolet vehicle (1) according to one of Claims 1 to 10.

## Revendications

1. Véhicule cabriolet (1) ayant un toit (2) qui comprend au moins deux parties (3 ; 4), lesquelles présentent des zones teintées, en particulier adaptées de façon à être harmonisées à la couleur de carrosserie,
**caractérisé en ce que**
les zones teintées sont formées avec des parties extérieures (8 ; 9) distinctes séparées pouvant être assemblées de façon directe ou indirecte à une structure de soutien (10) des parties formant toit (3 ; 4).

2. Véhicule cabriolet selon la revendication 1,
**caractérisé en ce que**
**en ce que** les parties extérieures (8 ; 9) sont formées en matériau de construction léger.

3. Véhicule cabriolet selon l'une des revendications 1 ou 2,
**caractérisé en ce que**
les parties extérieures (8 ; 9) sont formées en matière plastique.

4. Véhicule cabriolet selon l'une des revendications 1 à 3,
**caractérisé en ce que**
les parties extérieures (8 ; 9) peuvent être assemblées de façon amovible à la structure formant toit (10).

5. Véhicule cabriolet selon l'une des revendications 1 à 4,
**caractérisé en ce que**
les parties extérieures (8 ; 9) peuvent être assemblées de façon mécanique à la structure formant toit (10).

6. Véhicule cabriolet selon la revendication 5,
**caractérisé en ce que**
les parties extérieures (8 ; 9) peuvent être clipsées à la structure formant toit (10).

7. Véhicule cabriolet selon l'une des revendications 1 à 6,
**caractérisé en ce que**
les parties extérieures (8 ; 9) peuvent être collées à la structure formant toit (10).

8. Véhicule cabriolet selon l'une des revendications 1 à 7,
**caractérisé en ce que**
les parties extérieures (8 ; 9) s'étendent au niveau de bordures longitudinales latérales des parties formant toit (3 ; 4), et **en ce que** des corps formant plaques transparentes sont fournis dans une zone centrale (6 ; 7) relativement à un plan central longitudinal vertical du véhicule (5).

9. Véhicule cabriolet selon l'une des revendications 1 à 8,
**caractérisé en ce que**
un assortiment de parties extérieures (8 ; 9) peut être présenté et monté au niveau du toit autrement fini (2).

10. Véhicule cabriolet selon la revendication 9,
**caractérisé en ce que**
les parties extérieures (8 ; 9) de l'assortiment présentent des couleurs et/ou des formes différentes.

11. Véhicule cabriolet (1) ayant un toit (2) qui comprend au moins deux parties (3 ; 4), lesquelles présentent des zones couvrant le cadre de toit (10) au niveau de bords extérieurs latéraux,
**caractérisé en ce**
**que** les zones couvrantes sont formées avec des parties extérieures (8 ; 9) séparées distinctes pouvant être assemblées de façon directe ou indirecte à une structure de soutien (10) des parties formant toit (3 ; 4).

12. Toit (2) d'un véhicule cabriolet (1) selon l'une des revendications 1 à 10.
